(19) Europäisches Patentamt
European Patent Office
Office européen des brevets

(11) **EP 3 402 098 B1**

(12) **EUROPEAN PATENT SPECIFICATION**

(45) Date of publication and mention
of the grant of the patent:
**19.02.2020 Bulletin 2020/08**

(51) Int Cl.:
***H04B 17/14*** *(2015.01)*

(21) Application number: **17170666.6**

(22) Date of filing: **11.05.2017**

(54) **TRANSCEIVER FOR A WIRELESS COMMUNICATION SYSTEM, AND METHODS FOR INCREASING TRANSCEIVER LOOPBACK CALIBRATION ACCURACY**

**SENDEEMPFÄNGER FÜR DRAHTLOSKOMMUNIKATIONSSYSTEM UND VERFAHREN ZUR ERHÖHUNG DER LOOPBACK-KALIBRIERUNGSGENAUIGKEIT EINES SENDEEMPFÄNGERS**

**ÉMETTEUR-RÉCEPTEUR POUR UN SYSTÈME DE COMMUNICATION SANS FIL ET PROCÉDÉS PERMETTANT D'AUGMENTER LA PRÉCISION D'ÉTALONNAGE DE BOUCLAGE DE L'ÉMETTEUR-RÉCEPTEUR**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.11.2018 Bulletin 2018/46**

(73) Proprietor: **Intel IP Corporation**
**Santa Clara, CA 95054 (US)**

(72) Inventors:
• **Zur, Sarit**
**49063 Petah-Tikva (IL)**

• **Avraham, Oren Ezra**
**4632539 Herzlia (IL)**
• **Sulimarski, Avi**
**M 73134 Kfar Oranim (IL)**

(74) Representative: **2SPL Patentanwälte PartG mbB**
**Postfach 15 17 23**
**80050 München (DE)**

(56) References cited:
**US-A1- 2015 372 644      US-A1- 2016 359 614**

**Description**

**Field**

Examples relate to transceivers. In particular, examples relate to a transceiver for a wireless communication system, and methods for increasing transceiver loopback calibration accuracy.

**Background**

Increasing communication data rates impose strict quality requirements for transmitters and receivers used in wireless or wired telecommunication systems (e.g. an exemplary wireless telecommunication system is proposed in document US 2015/0372644 A1). In order to fulfill the requirements, transceivers may require loopback (LPBK)-aided calibrations since the transmit and receive paths of the transceivers (TX/RX circuit) may exhibit various impairments, which may be hard to predict, as for example IQ-imbalance and power amplifier nonlinearity (e.g. an exemplary I/Q mismatch calibration is proposed in document US 2016/0359614 A1). There may be a desire to increase the quality of the signal generated by means of a transceiver.

**Brief description of the Figures**

Some examples of apparatuses and/or methods will be described in the following by way of example only, and with reference to the accompanying figures, in which

Fig. 1 illustrates an example of a transceiver;

Fig. 2 illustrates an example of a transceiver comprising a loopback path;

Fig. 3 illustrates an example of a dependency of the cancellation of phase noise on a time delay between two oscillation signals;

Fig. 4 illustrates a flowchart of an example of a method for increasing transceiver loopback calibration accuracy;

Fig. 5 illustrates a flowchart of another example of a method for increasing transceiver loopback calibration accuracy; and

Fig. 6 illustrates an example of a user equipment comprising a transceiver.

**Detailed Description**

Various examples will now be described more fully with reference to the accompanying drawings in which some examples are illustrated. In the figures, the thicknesses of lines, layers and/or regions may be exaggerated for clarity.
Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Like numbers refer to like or similar elements throughout the description of the figures, which may be implemented identically or in modified form when compared to one another while providing for the same or a similar functionality.
It will be understood that when an element is referred to as being "connected" or "coupled" to another element, the elements may be directly connected or coupled or via one or more intervening elements. If two elements A and B are combined using an "or", this is to be understood to disclose all possible combinations, i.e. only A, only B as well as A and B. An alternative wording for the same combinations is "at least one of A and B". The same applies for combinations of more than 2 Elements.
The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

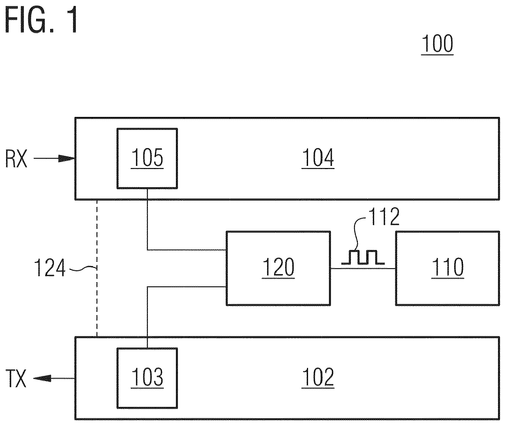

**Fig. 1** illustrates a transceiver 100 for a wireless communication system. The transceiver 100 comprises a transmit path 102, which comprises a first mixing circuit 103. Further, the transceiver circuit comprises a receive path 104, which comprises a second mixing circuit 105. A Local Oscillator (LO) circuit 110 is configured to generate an oscillation signal 112 to be used within the first mixing circuit 103 and the second mixing circuit 105 to up- or down-convert baseband signals or radio frequency signals. The transmit path 102 comprises components or circuitry required to generate a wireless communication signal that can, for example, be provided to an antenna element so as to be radiated into the environment. Some examples of transmit paths 102, therefore, may comprise a Power Amplifier (PA) in front of or upstream the antenna element to amplify a radio frequency signal generated within the transmit path. Likewise, the receive path 104 contains circuitry or elements required to process signals as received from an antenna element in order to determine information received by, for example, a received radio frequency signal. In some examples, the receive path serves to receive data signals during a regular (normal) operation mode of the wireless communication circuit, while the same receive path may serve for calibration purposes in a calibration mode. In other examples, the receive path may be a dedicated receive path which is used for monitoring/calibration only while a further receive path is used to receive data in the normal operation mode.

In a wireless communication system, transmit paths may optionally further include a modulation circuit in order to convert the information to be submitted to a baseband signal according to the presently used modulation scheme. Further, a subsequent mixing circuitry to up-convert the baseband signal to the radio frequency signal used to radiate the information may be present. Likewise, receive paths may include a down converter and a subsequent demodulation circuit in order to recover the logical information transported by means of the radio frequency communication signal. However, the term transmit path 102 and receive path 104 as used herein shall not be construed to include all the components technically necessary in order to generate a radio frequency signal or to recover the logical information transmitted by means of the radio frequency signal. To the contrary, a transmit path 102 or a receive path 104 as used in the context of the present description may comprise only a subset of those components or elements.

A Digital-to-Time Converter (DTC) 120 is configured to delay the oscillation signal 112 for the mixing circuit 103 or for the second mixing circuit 105 by an adjustable time difference. The DTC 120 is basically a delay modulator, which receives a digital control word and an input oscillation signal, and outputs a delayed version of it per the desired delay (as indicated by the control word).

Having the capability of delaying the oscillation signal 112 used by the first mixing circuit 103 or the second mixing circuit 105 allows to timely align the use of the oscillation signal 112 within both mixing circuits 103 and 105. In particular, since the time resolution of the DTC 120 is very high (up to tens of femtoseconds, fs). Hence, the DTC 120 may allow very precise adjustment of the delay of the oscillation signal 112 for the mixing circuit 103 or for the second mixing circuit 105. Assuring that the oscillation signals are used within the mixing circuits 103 and 105 timely aligned may result in close to perfect cancellation of phase noise impairments during a loopback calibration of the transceiver. In a loopback calibration, a calibration signal generated within the transmit path 102 is deliberately coupled into the receive path 104. The receive path measures the received calibration signal generated by the transmit path 102 and determines its quality using an appropriate metric. For the loopback calibration, the goal is to use the identical phase (clock cycle and phase) of the oscillation signal 112 to down convert a particular signal portion of the received calibration signal in the second mixing circuit 105 which was used to up convert the corresponding (identical) signal portion of the calibration signal within the first mixing circuit 103. Achieving this, one may mitigate or eliminate the effects of phase noise of the oscillation signal 112. The oscillation signal for both the first mixing circuit 103 and the second mixing circuit 105 is generated by LO circuit110 and distributed to the first mixing circuit 103 and the second mixing circuit 105. A time difference to be compensated by means of the DTC 120 may originate from various effects within the transceiver, for example from different lengths of the signal lines between the LO circuit 110 and the first mixing circuit 103 or the second mixing circuit 105 as well as from the signal propagation time between the first mixing circuit 103 and the second mixing circuit 105. All causes of time differences can be considered to timely align the use of the oscillation signal 112 without the necessity of identifying their root cause.

If the time difference between the use of an oscillation signal 112 within the second mixing circuit 105 of the receive path 104 and the first mixing circuit 103 of the transmit path 102 is reduced or - ideally - nearly eliminated, unavoidable phase noise within the oscillation signal 112 does not or only to a minor extent decrease the accuracy of a loopback calibration of the transceiver. In a loopback calibration, a loopback path between the transmit path and the receive path of the transceiver is used or closed so that a signal generated within the transmit path is deliberately coupled into the receive path. The receive path measures the signal generated by the transmit path and determines its quality using an appropriate metric. One particular implementation of a loopback calibration is the determination of a pre-distortion model for a PA within the transmit path 102. During the loopback calibration, the nonlinearities and memory effects being inherent to the PA are determined and, based on the so-determined pre-distortion model, the signal to be amplified by means of the PA is processed in anticipation of the PA's imperfections (e.g. within the baseband) so as to receive, as a net effect, a signal which is close to linear amplification and perfect phase preservation over the whole dynamic range of the PA. An optional loopback 124 path between the transmit path 102 and the receive path 104 is illustrated in Fig. 1. The loopback path 124 may have an arbitrary configuration. For example, it may be a wired connection which can be opened and closed by means of a single or multiple switches. According to some implementations, the loopback path 124 may further comprise an attenuation element so as to appropriately attenuate the transmit path's output signal to avoid exceeding the receive path's dynamic range.

If the accuracy of the loopback calibration is increased, the model, e.g. a pre-distortion model, determined by the loopback calibration can be determined with a greater accuracy. This, in turn, may result in a higher quality of the signal generated by the transmit path 102, if the model determined by the loopback calibration is used during regular operation to pre-distort the signal or to correct for other imperfections of components within the transmit path 102. Consequently, when the time difference between the use of the oscillation signal 112 within the transmit path 102 and the receive path 104 is decreased according to the examples described herein, a transceiver can be provided which generates a transmit signal that may be compliant also with highly-demanding signal quality requirements.

While some examples may use a receive path for the loopback calibration which is also used during a normal operation mode to receive signals containing payload, further examples may optionally use a receiver which is implemented for the purpose of performing loopback calibrations only (a loopback-receiver). Some examples using loopback receivers may optionally comprise a loopback path which permanently couples the transmit path 102 and the receive path 104.

Some examples of the transceiver further optionally comprise a pre-distortion estimation circuit configured to calculate a pre-distortion model for a PA within the transmit path 102 during the loopback calibration. To this end, a calibration signal may be transmitted by the transmit path 102 while the loopback path 124 is closed in order to determine the pre-distortion model using an oscillation signal having a low time delay between its use by the mixing circuit of the transmit path and the second mixing circuit of the receive path. If the pre-distortion model is determined using a transceiver comprising a DTC 120 to timely align the oscillation signals, the first mixing circuit 103 and the second mixing circuit 105 may provide for a loopback calibration having almost no impairments due to the oscillation signal's phase noise and hence provide a precise pre-distortion model for the PA. This, in turn, may result with a transmit path 102 providing a transmit signal complying with highly-demanding performance requirements. Some examples, therefore, may optionally further comprise a pre-distortion circuit which is configured to modify a transmit signal using the pre-distortion model determined during the loopback calibration.

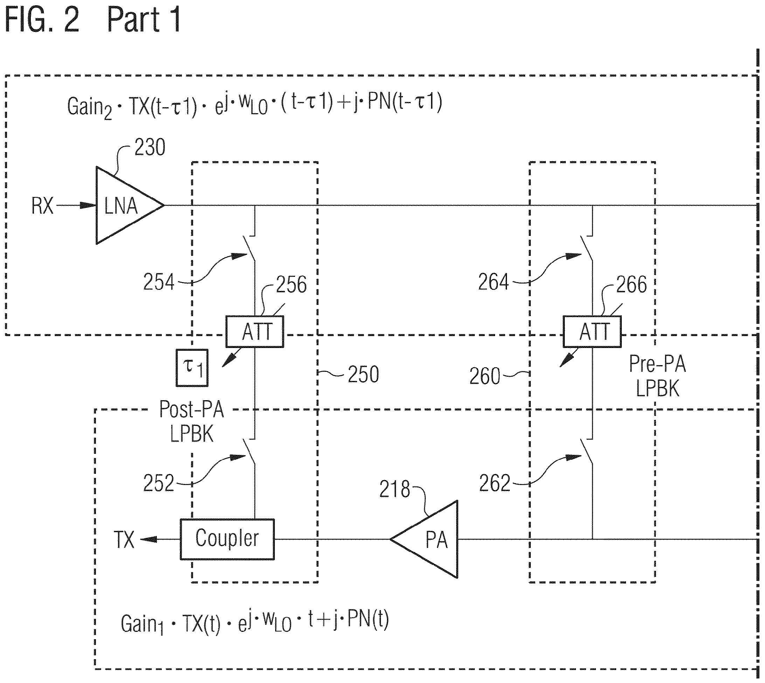

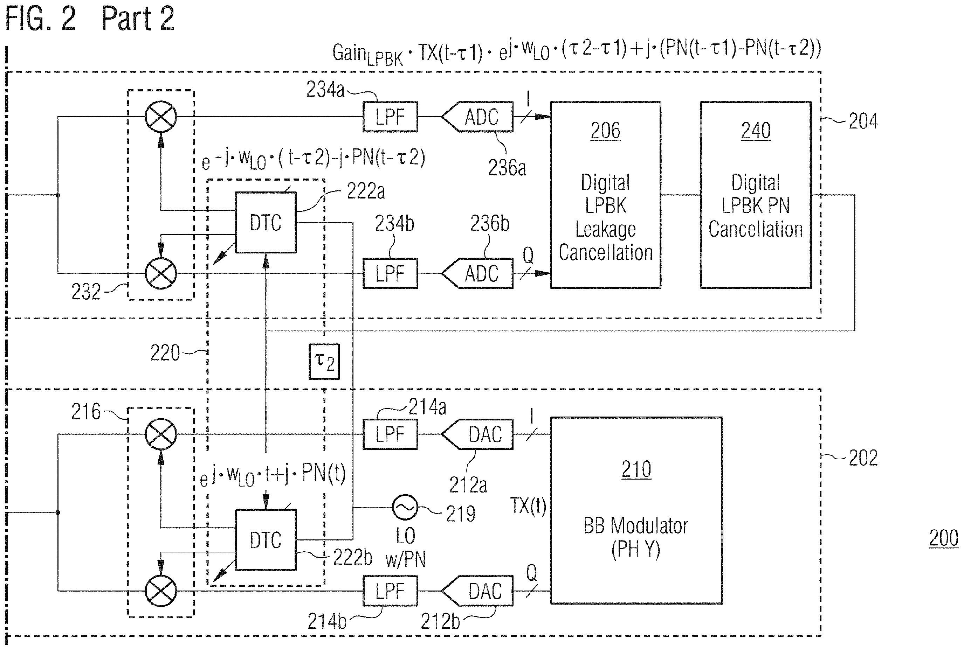

**Fig. 2** illustrates a transceiver 200 having a transmit path 202 and a receive path 204. For the purpose of the illustration, some components of the transmit path 202 and of the receive path 204 are illustrated. The exemplary transmit and receive paths use I/Q modulation. Further examples may optionally also use direct synthesis or polar transmitters. The transceiver 200 further comprises a LO circuit 219 configured to generate an oscillation signal for a first mixing circuit 216 and for a second mixing circuit 232.

The transmit path 202 serves to create a radio frequency signal from a digital baseband signal, the baseband signal comprising the information to be transmitted via the radio frequency signal. A baseband modulator 210 within the transmit path 202 creates both an I-component and a Q-component of the baseband signal. A first Digital-to-Analog Converter (DAC) 212a and a second DAC 212b serve to create analog representations of the I-component and Q-component, each DAC followed by low pass filters 214a and 214b to clear the spectrum, for example deleting alias components. The first mixer circuit 216 is used to up-convert the I-component and the Q-component and to sum up both up-converted components to provide the radio frequency signal. The so-generated radio frequency signal is amplified by means of a PA 218. An output of the PA 218 is connectable to an antenna element in order to radiate the amplified radio frequency signal into the environment. According to some examples, the connection between the PA 218 and the antenna element can optionally be opened and closed, for example by means of a switch.

The receive path 204 comprises a low-noise amplifier 230 which is connectable to a receive antenna element. The received radio frequency signal is down-converted by means of the second mixing circuit 232 which is also separating the I-component and the Q-component of the down-converted baseband signal from one another. Low pass filters 234a and 234b serve to clean the spectrum before the analog representation of the I-component and the Q-component is digitized by means of Analog-to-Digital Converters (ADCs) 236a and 236b.

A DTC 220 is configured to delay the oscillation signal for the first mixing circuit 216 or for the second mixing circuit 232 by an adjustable time difference. The DTC 220 optionally is configured to delay the oscillation signal for the first mixing circuit 216 or for the second mixing circuit 232 such that identical phases of the oscillation signal are used by the first mixing circuit 216 and by the second mixing circuit 232 at a time. In some examples, the time difference between identical phases of the local oscillator is less than 1%, 5%, 10%, 20% or 30% of a nominal cycle time of the oscillation signal. In the example illustrated in Fig. 2, the DTC 220 comprises a first DTC element 222a for the second mixing circuit 232 and a second DTC element 222b for the first mixing circuit 216. At least the DTC element for the mixing circuit with the antecedent phase is used to timely align the oscillation signals used within the first mixing circuit 216 and the second mixing circuit 232. Further examples may optionally always use both DTC elements 222a and 222b. Optionally, only a single DTC element may be present while the output of the DTC element is dynamically routed to the mixing circuit using the local oscillator with the antecedent phase.

In the example illustrated in Fig. 2, an optional leakage estimation circuit 206 serves to perform both calculating a leakage model between the transmit path 202 and the receive path 204 and using the leakage model to compensate leakage between the transmit path 202 and the receive path 204 during the loopback calibration of the transceiver of Fig. 2.

For example, if the leakage model comprises the same contributions for the PA 218 within the transmit path 202 as the model used for the loopback calibration, good pre-distortion models may be determined.

In examples where the direct leakage between the transmit path 202 and the receive path 204 shall be estimated, i.e., where an additional coupling due to the antenna elements shall not be considered, the PA 218 and the low-noise amplifier 230 may be disconnected from their antennas by switches or the like. With the given setup, the contribution of leakage between the transmit path 202 and the receive path 204 can optionally be considered during the loopback calibration.

A digital processing circuit 240 serves to control the DTC 220 in order to minimize the time difference between identical phases of the oscillation signal used by the first mixing circuit 216 and by the second mixing circuit 232. The time difference is minimized while a loopback path 250 between the transmit path 202 and the receive path 204 is closed so that a radio frequency signal generated within the transmit path 202 and amplified by means of PA 218 is coupled (looped back) into the receive path 204. In the particular example of Fig. 2, two loopback paths 250 and 260 are used. The first loopback path 250 comprises a first switch 252, a second switch 254 and a variable attenuation element 256 between the first switch 252 and the second switch 254. By closing the switches 252 and 254, loopback 250 path between the transmit path 202 and the receive path 204 can be closed in order to enable loopback calibration. Similarly, switches 262 and 264 of the second loopback path 260 serve for the same purpose.

At the digital processing circuit 240, a first digital baseband signal TX(t), on which the transmitted radio frequency signal is based, is received (the TX waveform TX(t) may, e.g., be taken from memory). Further, a second digital baseband signal derived from the received radio frequency signal by the ADCs 236a and 236b (and the other components of the receive path 204) is received by the digital processing circuit 240.

The second digital baseband signal may be written in continuous time domain and in complex representation as follows:

$$\text{LPBK(t)} = \text{Gain}_{\text{LPBK}} \cdot \text{TX}(t - \tau_1) \cdot e^{j \cdot w_{\text{LO}} \cdot (\tau_2 - \tau_1) + j \cdot (\text{PN}(t - \tau_1) - \text{PN}(t - \tau_2))} \qquad (1)$$

$\text{Gain}_{\text{LPBK}}$ denotes the total gain of the second digital baseband, PN denotes the phase noise of the oscillation signal, $\omega_{LO}$ denotes the frequency of the oscillation signal, $\tau_1$ denotes the propagation time of the radio frequency signal in the loopback path 250, and $\tau_2$ denotes the time difference between identical phases of the oscillation signal used by the first mixing circuit 216 and by the second mixing circuit 232.

For the purpose of this calibration, the phase noise of the oscillation signal may be ignored as the performed operations require a low Signal-to-Noise Ratio (SNR) and relatively low bandwidth.

First, the digital processing circuit 240 is configured to calculate (estimate) the propagation time $\tau_1$ of the radio frequency signal in the loopback path 250 based on the first digital baseband signal and the second digital baseband signal. For this purpose, the following frequency-domain time-synchronization approach may be used:

$$\frac{\text{LPBK(f)}}{\text{TX(f)}} = \frac{\text{Gain}_{\text{LPBK}} \cdot \text{TX(f)} \cdot e^{-jw\tau_1} \cdot e^{j \cdot w_{\text{LO}} \cdot (\tau_2 - \tau_1)}}{\text{TX(f)}} = \alpha \cdot e^{-jw\tau_1} \qquad (2)$$

$\alpha$ is a constant complex term, since the propagation time $\tau_1$ and the time difference $\tau_2$ are constant. The Fourier transformation may, e.g., be done using a Fast Fourier Transform (FFT), a Discrete Fourier Transform or a Goertzel algorithm. That is, the digital processing circuit 240 is configured to calculate the ratio of the Fourier transformed second digital baseband signal to the Fourier transformed first digital baseband signal.

Then, the digital processing circuit 240 is configured to calculate a slope of a phase variation over angular frequency for the ratio of above expression (2):

$$Slope\left\{Phase\left[\frac{\text{LPBK(f)}}{\text{TX(f)}}\right]\right\} = Slope\{-w\tau_1\} = -\tau_1 \qquad (3)$$

It is evident from above expression (3) that the slope of the phase variation over angular frequency for the ratio of above expression (2) gives an estimate for the propagation time $\tau_1$. The absolute value of the propagation time $\tau_1$ of the radio frequency signal in the loopback path 250 is equal to the absolute value of the slope of the phase variation

Now that the propagation time $\tau_1$ it calculated (estimated), the first digital baseband signal and the second digital baseband signal may be correlated by the digital processing circuit 240 for different time differences between the use of the oscillation signal by the first mixing circuit 216 and the use of the oscillation signal by the second mixing circuit 232, i.e., for different time differences between identical phases of the oscillation signal used by the first mixing circuit 216 and by the second mixing circuit 232. The digital processing circuit 240 is configured to take into account the previously calculated propagation time $\tau_1$ for the correlation. In order to achieve the different time differences between identical phases of the oscillation signal used by the first mixing circuit 216 and by the second mixing circuit 232, the digital processing circuit may adjust a control word for the DTC 220. Accordingly, the DTC 220 delays the oscillation signal for the first mixing circuit 216 or for the second mixing circuit 232 by different time differences.

The digital processing circuit 240 calculates a parameter of a representation of the ratio of the second digital baseband signal to the first digital baseband signal for the different time differences, respectively:

$$\alpha \triangleq \int_0^T \text{LPBK}(t) \cdot \text{TX}^*(t - \tau_1) \cdot dt = \int_0^T \text{Gain}_{\text{LPBK}} \cdot \text{TX}(t - \tau_1) \cdot \text{TX}^*(t - \tau_1) \cdot e^{j \cdot w_{\text{LO}} \cdot (\tau_2 - \tau_1)} \cdot$$

$$dt = \text{Gain}_{\text{LPBK}} \cdot e^{j \cdot w_{\text{LO}} \cdot (\tau_2 - \tau_1)} \cdot \int_0^T |\text{TX}(t - \tau_1)|^2 \cdot dt = \text{Gain}_{\text{LPBK}} \cdot e^{j \cdot w_{\text{LO}} \cdot (\tau_2 - \tau_1)} \cdot E_{TX} \quad (4)$$

If only non-constants are observed, expression (4) may be simplified to:

$$\alpha \propto e^{j \cdot w_{\text{LO}} \cdot (\tau_2 - \tau_1)} \quad (5)$$

The parameter $\alpha$ is proportional to the difference between the time difference $\tau_2$ and the propagation time $\tau_1$.

By manipulating the DTC digital delay control word (e.g. using a binary search), the digital processing circuit 240 subsequently performs the following optimization stage:

$$max(\alpha) \xrightarrow{yields} \tau_2 - \tau_1 = 0 \xrightarrow{yields} \tau_2 = \tau_1 \quad (6)$$

That is, the digital processing circuit 240 selects the parameter $\alpha$ indicating the highest correlation between the second digital baseband signal and the first digital baseband signal as the best correlation result.

In this respect, it may be assumed that the oscillation signal's delay difference ($\tau_2 - \tau_1$) is limited to one oscillation signal period (e.g. this translates to 200 ps for a 5 GHz oscillation frequency, and above 400 ps for a 2.4 GHz oscillation frequency).

Expression (1) may be rewritten based on expression (6):

$$\text{LPBK}(t) = \text{Gain}_{\text{LPBK}} \cdot \text{TX}(t - \tau_1) \quad (7)$$

In order to achieve the desired time difference, the digital processing circuit generates, using the time difference related to the best correlation result (as determined in expression (6), the control word for the DTC 220. That is, at the end of this optimization stage (e.g. a binary search may be used), identical delay of the TX oscillation signal and the RX oscillation signal at the RX mixer 232 may be achieved, yielding optimal (maximum) LPBK phase noise cancellation.

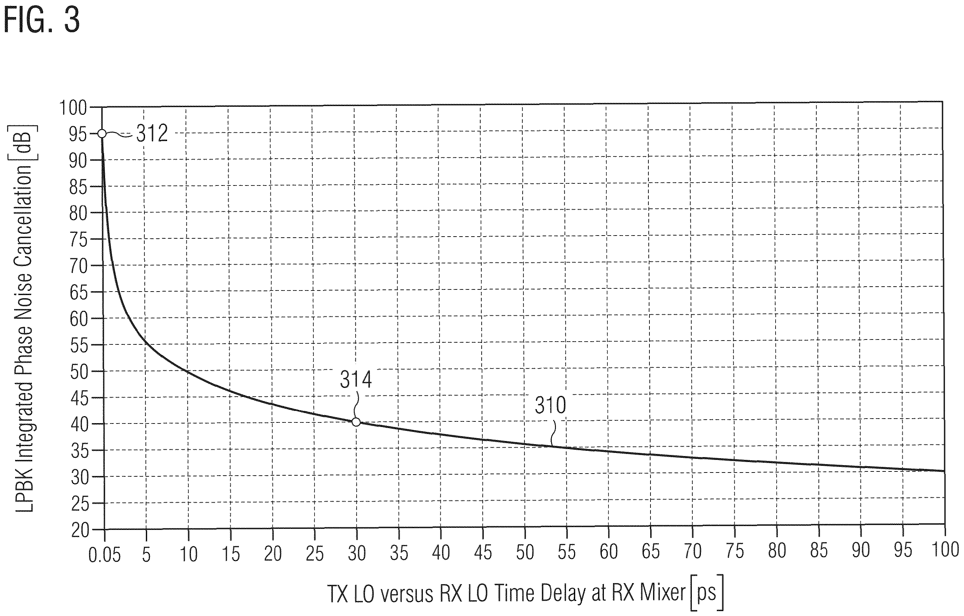

The cancelation of phase noise is a function of the delay time or of the resolution achieved for the alignment of the oscillation signals. **Fig. 3** exemplary illustrates the integrated phase noise cancelation as a function of the transmitter (TX) oscillation signal vs. the receiver (RX) oscillation signal (LO) time delay at the second mixing circuit 232 of the receive path 204. The x-axis of Fig. 3 illustrates the remaining time delay between the two oscillation signals and the y-axis illustrates the associated integrated phase noise cancellation. As the solid curve 310 illustrates, the delay alignment resolution may be chosen to match a desired level of phase noise cancelation. For example, as illustrated by means of marker 312 in Fig. 3, for a cancelation of 95 dB, a resolution of 100 fs would be required, while for a cancelation of 40 dB (marker 314) a resolution of the 30 ps would be sufficient.

For example, the transceiver 200 may perform the above digital operation autonomously and automatically in LPBK mode.

Since the early side (TX/RX) oscillation signal is digitally delayed (lagged) using the DTC 220, a very high delay resolution may be achieved (e.g. 100 femtoseconds, fs, and better).

The radio frequency signal may, e.g., be a regular radio frequency transmit signal carrying user data. That is, the time difference $\tau_2$ between the use of the oscillation signal by the first mixing circuit 216 and the use of the oscillation signal by the second mixing circuit 232 may be minimized during regular (normal) operation of the transceiver. By using a regular radio frequency transmit signal, downtimes of the transceiver 200 (i.e. transceiver 200 is offline) or throughput degradations may be avoided. For example, the radio frequency signal may be a legitimate Wi-Fi packet.

As indicated above, the time difference $\tau_2$ is performed using the loopback path 260 arranged downstream of PA 218, i.e., a Post-PA LPBK mode is used. Memory Power Amplifier Pre-Distortion (MPAPD), which is a very phase noise sensitive calibration, uses the Post-PA LPBK mode as well. Therefore, for MPAPD, it may be beneficial to cancel/estimate the phase noise/delay, respectively, in this mode, and not a Pre-PA LPBK mode (using the loopback path 250 upstream of the PA 218), which might exhibit a different time delay. It is evident that, should the need arise (e.g. for a phase noise sensitive calibration using this mode), the above estimation may be performed in the Pre-PA LPBK mode (using the loopback path 250 instead of the loopback path 260) as well.

In order to perform MPAPD (or any other) calibration, the transceiver 200 may additionally comprise a pre-distortion estimation circuit (not illustrated). For example, the pre-distortion estimation circuit may be implemented into the digital processing circuit 240.

During loopback calibration, the transmit path transmits a calibration signal via the transmit path 202 into the receive path 204. The receive path 204 receives the calibration signal and the pre-distortion estimation circuit calculates a pre-distortion model for the PA 218 using the received and the transmitted calibration signal. Loopback path 250 is coupled to the transmit path 202 downstream PA 218, while loopback path 260 is coupled to the transmit path 202 upstream PA 218. Performing loopback calibration with timely aligned oscillation signals used within the mixing circuit 216 and the second mixing circuit 232 may result in a pre-distortion model and a transmitter providing a signal compliant with high quality requirements, e.g. with respect to an error vector magnitude (EVM) or with respect to a spectral mask.

Therefore, the transceiver 200 may additionally comprise a pre-distortion circuit (not illustrated) in the transmit path 202 that is configured to modify a transmit signal based on the pre-distortion model.

In summary, a loopback calibration used to eventually meet certain signal quality requirements for today's and future transceiver circuits may itself be subject to various imperfections, which potentially affect the loopback calibration mechanisms and degrade performance. One of those loopback impairments may be LO phase noise. For example, the LO phase noise may introduce loopback AM/PM distortion, and thus degrade loopback calibration performance (e.g. resulting in a degraded pre-distortion model). This may in particular affect pre-distortion models (e.g. MPAPD) which often requires three times the bandwidth for the measurement within the loopback calibration. This may sum up to 470 MHz of bandwidth within the loopback path, for example for today's and future wireless LAN or mobile telecommunication standards, such as for example IEEE 802.11ac or IEEE 802.11ax. High bandwidths experience high integrated phase noise since the further the phase noise impairments increase, the greater the bandwidth is and the further the observed channel is spaced from the center of frequency of the carrier.

The examples described herein choose a novel approach of optimizing phase noise cancelation over the overall loopback path by automatically and fully digitally calibrating the time delay between the use of the oscillation signal within the transmit path (TXLO) and within the receive path (RXLO) within the receive path's mixer circuit. By adding a delay to the early side's oscillation signal (TX or RX), one may considerably lower the delay between the up-converter oscillation signal and the down-converter oscillation signal, resulting in a strong decrease of the overall phase noise impairments. After the delay alignment, the loopback phase noise (deterioration of the loopback calibration due to the phase noise) may be extremely low and introduce practically close to zero distortion (for example, phase noise-induced loopback AM/PM distortion for Power Amplifier Pre-Distortion, PAPD). As compared to current solutions, which may rely either on excellent synthesizer phase noise performance and/or on cancellation of the TX mixer (up-converter) phase noise at the RX mixer (down-converter), which requires a very low time delay between the TXLO and the RXLO at the RX mixer, examples described herein may provide even better cancelation at lower design or implementation complexity. Conventional approaches based on rigorous and challenging RF design, guaranteeing either excellence synthesizer phase noise performance and/or ultra-low delay between the TXLO and the RXLO at the RX mixer exhibit several further drawbacks. Radio frequency circuit simulations do not predict the silicon behavior very well in this aspect and the achievable performance is limited, resulting in remaining considerable levels of phase noise, which, in turn, may affect calibrations. Conventional efforts complicate the radio frequency design and require higher resources and design and verification time. Given that low synthesizer integrated phase noise and low delay is achieved for a transmission path generating a radio frequency signal having low or moderate bandwidth (e.g. 20 MHz), this may not be sufficient for future or more demanding applications having higher signal bandwidth.

Loopback calibration phase noise cancelation degrades over frequency offset (from the frequency of the oscillation signal). For the determination of a pre-distortion model for a PA, this effect may be considerable, since the determination of the pre-distortion model may require high bandwidth (up to 470 MHz for 160 MHz signals) and, therefore, would not enjoy high cancellation across its full observation bandwidths if based on conventional approaches. If increasing bandwidths would be tackled based on conventional approaches, the resultant increased loopback integrated phase noise would require even more stringent performance requirements for the hardware (synthesized oscillation signal, delay) which would be very difficult and almost impossible to meet by design and, if so, be extremely expensive during the conceptual phase. To the contrary, the examples described herein do not try to minimize the phase noise impairments of the loopback calibration by design but rather cancel the phase noise impairment by adjusting (time delaying) the transmit/receive loopback paths to exhibit the same (up to some degree) time degree of TXLO and RXLO at the RX mixer. This, in turn, results in low integrated phase noise within the loopback calibration, even at high frequency offsets and over ultra-wide integration bandwidths, which is a critical use case, in particular because of MPAPD calibration, i.e., the necessity to pre-distort signals for PAs in order to enable transmitters being compliant with even highly demanding performance requirements.

In the examples described herein, the time delay is estimated digitally and automatically by the digital LPBK phase noise cancellation block, wherein the time delay is simultaneously cancelled (applied) digitally and automatically using the DTC.

This new approach digitally and automatically estimates the time delay and digitally, automatically and simultaneously adjusts for it with superior correction resolution. This may enable ultra-low LPBK integrated phase noise - even at high frequency offsets and over an ultra-wide integration bandwidth (a critical use case due to MPAPD). In short, it is a true automatically adjustable close-loop digital approach for LPBK phase noise cancellation.

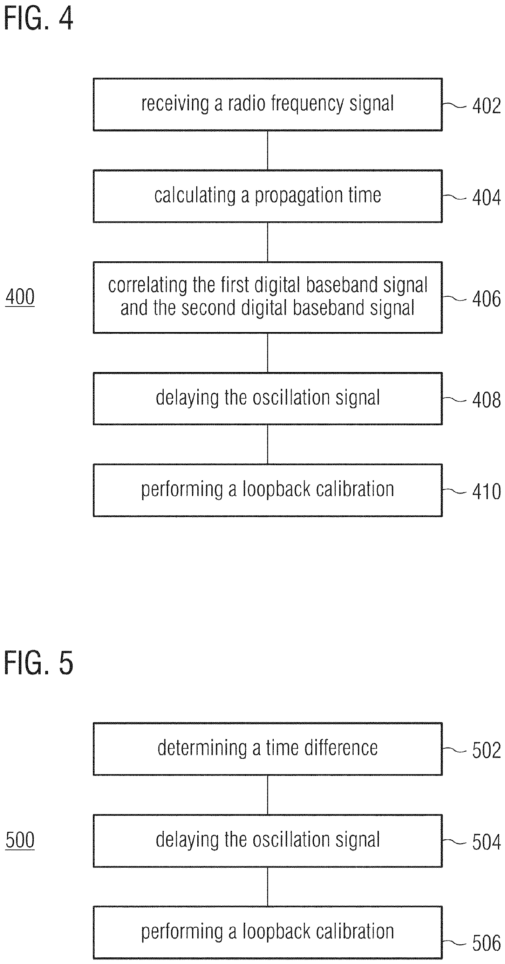

An example of a method 400 for increasing transceiver loopback calibration accuracy is illustrated by means of a flowchart in **Fig. 4.** The method 400 comprises receiving 402 a radio frequency signal via a receive path of a transceiver from a transmit path of the transceiver which is coupled to the receive path via a loopback path. Further, the method 400 comprises calculating 404 a propagation time of the radio frequency signal in the loopback path based on a first digital baseband signal on which the transmitted radio frequency signal is based, and a second digital baseband signal derived from the received radio frequency signal. The method 400 additionally comprises correlating 406, taking into account the propagation time, the first digital baseband signal and the second digital baseband signal for different time differences between the use of an oscillation signal by a first mixing circuit within the transmit path and the use of the oscillation signal by a second mixing circuit within the receive path. Also, the method 400 comprises delaying 408, using the time difference related to the best correlation result, the oscillation signal for the first mixing circuit or for the second mixing circuit. The method 400 further comprises performing 410 a loopback calibration of the transceiver using the delayed oscillation signal.

In some examples, calculating 404 the propagation time of the radio frequency signal in the loopback path may comprise calculating the ratio of the Fourier transformed second digital baseband signal to the Fourier transformed first digital baseband signal. Calculating 404 the propagation time may further comprise calculating a slope of a phase variation over angular frequency for the ratio. In this respect, the absolute value of the propagation time of the radio frequency signal in the loopback path may be equal to the absolute value of the slope of the phase variation.

Correlating 406 the first digital baseband signal and the second digital baseband signal for different time differences may, in some examples, comprise adjusting, using a DTC that delays the oscillation signal for the first mixing circuit or for the second mixing circuit, the different time differences between the use of the oscillation signal by the first mixing circuit and the use of the oscillation signal by the second mixing circuit.

Further, correlating 406 the first digital baseband signal and the second digital baseband signal for different time differences may comprises calculating a parameter of a representation of the ratio of the second digital baseband signal to the first digital baseband signal for the different time differences, respectively. The parameter is proportional to the difference between the time difference and the propagation time. Correlating 406 the first digital baseband signal and the second digital baseband signal may additionally comprise selecting the parameter indicating the highest correlation between the second digital baseband signal and the first digital baseband signal as the best correlation result.

For example, the parameter may be based on an expression which is mathematically correspondent to

$$a \propto e^{j\omega_{LO}(\tau_2 - \tau_1)}$$

with $a$ denoting the parameter, $\omega_{LO}$ denoting the frequency of the oscillation signal, $\tau_1$ denoting the propagation time, and $\tau_2$ denoting the time difference.

Delaying the oscillation signal may, e.g., comprise adjusting, using the time difference related to the best correlation result, a code word for a DTC delaying the oscillation signal for the first mixing circuit or for the second mixing circuit. A DTC enables a very precise delay resolution. Accordingly, a high delay accuracy may be achieved.

In some examples, the radio frequency signal may be a regular radio frequency transmit signal carrying user data. By using a regular transmit signal, a downtime of the transceiver may be avoided. Accordingly, a throughput degradation due to the calibration may be avoided.

The loopback path may be coupled to the transmit path downstream of a PA within the transmit path. Some loopback calibrations use loopback paths coupled downstream of the transmit path's PA. Accordingly, the propagation time of transmit signal, which is considered for determining the time differences between the use of the oscillation signal by the first mixing circuit and the use of the oscillation signal by the second mixing circuit, is the same as for the loopback calibrations. Accordingly, the local oscillator phase noise during the loopback calibration may be reduced.

Performing 410 the loopback calibration may, in some examples, comprise transmitting a calibration signal via the transmit path, receiving the calibration signal via the receive path, and calculating a pre-distortion model for the transmit path using the received and the transmitted calibration signal. Since the pre-distortion model can be determined with reduced impairments due to local oscillator phase noise, the pre-distortion model may serve to provide a transmitter fulfilling desired net requirements, e.g. with respect to the spectral mask or to the EVM.

More details and aspects of the method are mentioned in connection with the proposed concept or one or more examples described above (e.g. Figs. 1 - 3). The method may comprise one or more additional optional features corresponding to one or more aspects of the proposed concept or one or more examples described above.

An example of another method 500 for increasing transceiver loopback calibration accuracy is illustrated by means of a flowchart in **Fig. 5.** The method 500 comprises determining 502 a time difference between the use of an oscillation signal by a first mixing circuit within a transmit path of the transceiver and the use of the oscillation signal by a second mixing circuit within a receive path of the transceiver. Further, the method 500 comprises delaying 504 the oscillation signal for the first mixing circuit or for the second mixing circuit to reduce the time difference using a digital-to-time converter. The method 500 additionally comprises performing 506 a loopback calibration of the transceiver at the reduced time difference.

Delaying the oscillation signal may, e.g., comprise adjusting a control word for the DTC based on the time difference. Using a DTC may enable a high delay accuracy.

In some examples, determining 502 the time difference may comprise closing a loopback path between the transmit path and the receive path of the transceiver during regular operation of the transceiver. Determining 502 the time difference may further comprise receiving a radio frequency signal via the receive path from the transmit path, and calculating a propagation time of the radio frequency signal in the loopback path based on a first digital baseband signal on which the transmitted radio frequency signal is based, and a second digital baseband signal derived from the received radio frequency signal. Also, determining 502 the time difference may comprise correlating, taking into account the propagation time, the first digital baseband signal and the second digital baseband signal for different time differences between the use of the oscillation signal by a first mixing circuit and the use of the oscillation signal by the second mixing circuit. Additionally, determining 502 the time difference may comprise selecting the time difference related to the best correlation result as the time difference between the use of the oscillation signal by the first mixing circuit and the use of the oscillation signal by the second mixing circuit.

More details and aspects of the method are mentioned in connection with the proposed concept or one or more examples described above (e.g. Figs. 1 - 3). The method may comprise one or more additional optional features corresponding to one or more aspects of the proposed concept or one or more examples described above.

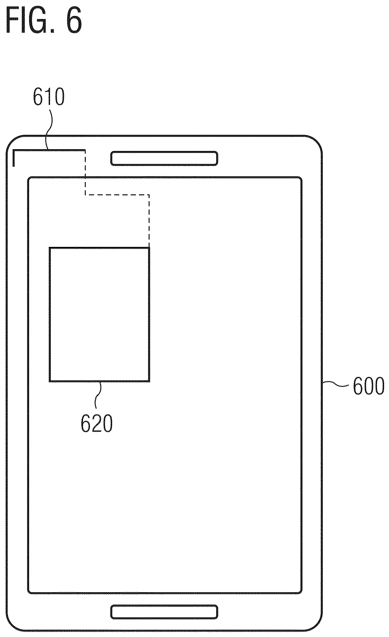

An example of an implementation using a transceiver according to one or more aspects of the proposed architecture or one or more examples described above is illustrated in Fig. 6. Fig. 6 schematically illustrates an example of a mobile device 600 (e.g. mobile phone, smartphone, tablet-computer, or laptop) comprising a transceiver 620 according to an example described herein. An antenna element 610 of the mobile device 600 may be coupled to the transceiver 620. To this end, mobile device may be provided enabling top grade TX performance and efficiency as well as RF performance. In particular, high throughput and high range operation may be enabled.

While the examples have previously been described mainly for WLAN (Wi-Fi) applications, further examples of wireless communication circuits may be configured to operate according to one of the 3GPP-standardized mobile communication networks or systems. The mobile or wireless communication system may correspond to, for example, a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc..

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for pedagogical purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a sensor signal", "means for generating a transmit signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software, but may include digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

## Claims

1. A method (400) for increasing transceiver loopback calibration accuracy, comprising:

   receiving (402) a radio frequency signal via a receive path of a transceiver from a transmit path of the transceiver which is coupled to the receive path via a loopback path;
   calculating (404) a propagation time of the radio frequency signal in the loopback path based on a first digital baseband signal on which the transmitted radio frequency signal is based, and a second digital baseband signal derived from the received radio frequency signal;
   correlating (406), taking into account the propagation time, the first digital baseband signal and the second digital baseband signal for different time differences between the use of an oscillation signal by a first mixing circuit within the transmit path and the use of the oscillation signal by a second mixing circuit within the receive path;
   delaying (408), using the time difference related to the best correlation result, the oscillation signal for the first mixing circuit or for the second mixing circuit; and

performing (410) a loopback calibration of the transceiver using the delayed oscillation signal.

2.   The method of claim 1, wherein calculating (404) the propagation time of the radio frequency signal in the loopback path comprises:

calculating a ratio of the Fourier transformed second digital baseband signal to the Fourier transformed first digital baseband signal; and
calculating a slope of a phase variation over angular frequency for the ratio,
wherein the absolute value of the propagation time of the radio frequency signal in the loopback path is equal to the absolute value of the slope of the phase variation.

3.   The method of claim 1 or claim 2, wherein correlating (406) the first digital baseband signal and the second digital baseband signal for different time differences comprises:
adjusting, using a digital-to-time converter that delays the oscillation signal for the first mixing circuit or for the second mixing circuit, the different time differences between the use of the oscillation signal by the first mixing circuit and the use of the oscillation signal by the second mixing circuit.

4.   The method of any of claims 1 to 3, wherein correlating (406) the first digital baseband signal and the second digital baseband signal for different time differences comprises:

calculating a parameter of a representation of a ratio of the second digital baseband signal to the first digital baseband signal for the different time differences, respectively, wherein the parameter is proportional to the difference between the time difference and the propagation time; and
selecting the parameter indicating the highest correlation between the second digital baseband signal and the first digital baseband signal as the best correlation result.

5.   The method of any of the preceding claims, wherein delaying (408) the oscillation signal comprises:
adjusting, using the time difference related to the best correlation result, a code word for a digital-to-time converter delaying the oscillation signal for the first mixing circuit or for the second mixing circuit.

6.   The method of any of the preceding claims, wherein the radio frequency signal is a radio frequency transmit signal carrying user data.

7.   The method of any of the preceding claims, wherein the loopback path is coupled to the transmit path downstream of a power amplifier within the transmit path.

8.   The method of any of the preceding claims, wherein performing (410) the loopback calibration comprises:

transmitting a calibration signal via the transmit path;
receiving the calibration signal via the receive path; and
calculating a pre-distortion model for the transmit path using the received and the transmitted calibration signal.

9.   A transceiver (100) for a wireless communication system, comprising:

a transmit path (102) comprising a first mixing circuit (103);
a receive path (104) comprising a second mixing circuit (105);
a local oscillator circuit (110) configured to generate an oscillation signal (112) for the first mixing circuit (103) and for the second mixing circuit (105);
a digital-to-time converter (120) configured to delay the oscillation signal (112) for the first circuit (103) or for the second mixing circuit (105) by an adjustable time difference; and
at least one loopback path (124) coupled between the transmit path (102) and the receive path (104),
wherein the receive path (104) is configured to receive a radio frequency signal from the transmit path when the loopback path (124) is closed, and wherein the transceiver further comprises a digital processing circuit (240) configured to:

receive a first digital baseband signal on which the transmitted radio frequency signal is based, and a second digital baseband signal derived from the received radio frequency signal;
calculate a propagation time of the radio frequency signal in the loopback path based on the first digital baseband signal and the second digital baseband signal;

correlate, taking into account the propagation time, the first digital baseband signal and the second digital baseband signal for different time differences between the use of the oscillation signal by the first mixing circuit and the use of the oscillation signal by the second mixing circuit; and

generate, using the time difference related to the best correlation result, a control word for the digital-to-time converter (120).

10. The transceiver of claim 9, wherein the loopback path (124) is coupled to the transmit path (102) downstream of a power amplifier (218) within the transmit path (124).

11. The transceiver of claim 9 or claim 10, wherein the radio frequency signal is a radio frequency transmit signal carrying user data.

12. The transceiver of any of claims 9 to 11, wherein the digital processing circuit (240) is configured to calculate a propagation time by:

calculating a ratio of the Fourier transformed second digital baseband signal to the Fourier transformed first digital baseband signal; and

calculating a slope of a phase variation over angular frequency for the ratio,

wherein the absolute value of the propagation time of the radio frequency signal in the loopback path is equal to the absolute value of the slope of the phase variation.

13. The transceiver of any of claims 9 to 12, wherein the digital processing circuit (240) is configured to correlate the first digital baseband signal and the second digital baseband signal for different time differences by:

calculating a parameter of a representation of a ratio of the second digital baseband signal to the first digital baseband signal for the different time differences, respectively, wherein the parameter is proportional to the difference between the time difference and the propagation time; and

selecting the parameter indicating the highest correlation between the second digital baseband signal and the first digital baseband signal as the best correlation result.

**Patentansprüche**

1. Verfahren (400) zum Erhöhen der Schleifenschaltungskalibrierungsgenauigkeit einer Sende-/Empfangseinrichtung, das Folgendes umfasst:

Empfangen (402) eines Hochfrequenzsignals über einen Empfangsweg einer Sende-/Empfangseinrichtung von einem Sendeweg der Sende-/Empfangseinrichtung, die über einen Schleifenschaltungsweg an den Empfangsweg gekoppelt ist;

Berechnen (404) einer Ausbreitungszeit des Hochfrequenzsignals im Schleifenschaltungsweg auf der Grundlage eines ersten digitalen Basisbandsignals, das das gesendete Hochfrequenzsignal als Grundlage verwendet, und eines zweiten digitalen Basisbandsignals, das aus dem empfangenen Hochfrequenzsignal abgeleitet wurde;

Korrelieren (406) unter Berücksichtigung der Ausbreitungszeit des ersten digitalen Basisbandsignals und des zweiten digitalen Basisbandsignals für verschiedene Zeitdifferenzen zwischen der Verwendung eines Schwingungssignals durch eine erste Mischschaltung im Sendeweg und der Verwendung des Schwingungssignals durch eine zweite Mischschaltung im Empfangsweg;

Verzögern (408) unter Verwendung der Zeitdifferenz, die mit dem besten Korrelationsergebnis in Beziehung steht, des Schwingungssignals für die erste Mischschaltung oder für die zweite Mischschaltung; und

Durchführen (410) einer Schleifenschaltungskalibrierung der Sende-/Empfangseinrichtung unter Verwendung des verzögerten Schwingungssignals.

2. Verfahren nach Anspruch 1, wobei das Berechnen (404) der Ausbreitungszeit des Hochfrequenzsignals im Schleifenschaltungsweg Folgendes umfasst:

Berechnen eines Verhältnisses des Fourier-transformierten zweiten digitalen Basisbandsignals zum Fourier-transformierten ersten digitalen Basisbandsignal und

Berechnen einer Steigung einer Phasenschwankung über der Winkelfrequenz für das Verhältnis, wobei

EP 3 402 098 B1

der Betrag der Ausbreitungszeit des Hochfrequenzsignals im Schleifenschaltungsweg gleich dem Betrag der Steigung der Phasenschwankung ist.

3. Verfahren nach Anspruch 1 oder Anspruch 2, wobei das Korrelieren (406) des ersten digitalen Basisbandsignals und des zweiten digitalen Basisbandsignals für verschiedene Zeitdifferenzen Folgendes umfasst:
Einstellen unter Verwendung eines Digital/Zeit-Umsetzers, der das Schwingungssignal für die erste Mischschaltung oder für die zweite Mischschaltung verzögert, der verschiedenen Zeitdifferenzen zwischen der Verwendung des Schwingungssignals durch die erste Mischschaltung und der Verwendung des Schwingungssignals durch die zweite Mischschaltung.

4. Verfahren nach einem der Ansprüche 1 bis 3, wobei das Korrelieren (406) des ersten digitalen Basisbandsignals und des zweiten digitalen Basisbandsignals für verschiedene Zeitdifferenzen Folgendes umfasst:

Berechnen eines Parameters einer Darstellung eines Verhältnisses des zweiten digitalen Basisbandsignals zum ersten digitalen Basisbandsignal jeweils für die verschiedenen Zeitdifferenzen, wobei der Parameter zur Differenz zwischen der Zeitdifferenz und der Ausbreitungszeit proportional ist; und
Wählen des Parameters, der die höchste Korrelation zwischen dem zweiten digitalen Basisbandsignal und dem ersten digitalen Basisbandsignal anzeigt, als das beste Korrelationsergebnis.

5. Verfahren nach einem der vorhergehenden Ansprüche, wobei das Verzögern (408) des Schwingungssignals Folgendes umfasst:
Einstellen unter Verwendung der Zeitdifferenz, die mit dem besten Korrelationsergebnis in Beziehung steht, eines Codewortes für einen Digital/Zeit-Umsetzer, der das Schwingungssignal für die erste Mischschaltung oder für die zweite Mischschaltung verzögert.

6. Verfahren nach einem der vorhergehenden Ansprüche, wobei das Hochfrequenzsignal ein Hochfrequenzsendesignal ist, das Anwenderdaten führt.

7. Verfahren nach einem der vorhergehenden Ansprüche, wobei der Schleifenschaltungsweg stromabwärts eines Leistungsverstärkers im Sendeweg an den Sendeweg gekoppelt ist.

8. Verfahren nach einem der vorhergehenden Ansprüche, wobei das Durchführen (410) der Schleifenschaltungskalibrierung Folgendes umfasst:

Senden eines Kalibriersignals über den Sendeweg;
Empfangen des Kalibriersignals über den Empfangsweg und
Berechnen eines Vorverzerrungsmodells für den Sendeweg unter Verwendung des empfangenen und des gesendeten Kalibriersignals.

9. Sende-/Empfangseinrichtung (100) für ein drahtloses Kommunikationssystem, die Folgendes umfasst:

einen Sendeweg (102), der eine erste Mischschaltung (103) umfasst;
einen Empfangsweg (104), der eine zweite Mischschaltung (105) umfasst;
eine lokale Schwingungsschaltung (110), die konfiguriert ist, ein Schwingungssignal (112) für die erste Mischschaltung (103) und für die zweite Mischschaltung (105) zu erzeugen;
einen Digital/Zeit-Umsetzer (120), der konfiguriert ist, das Schwingungssignal (112) für die erste Schaltung (103) oder für die zweite Mischschaltung (105) durch eine einstellbare Zeitdifferenz zu verzögern; und
mindestens einen Schleifenschaltungsweg (124), der zwischen den Sendeweg (102) und den Empfangsweg (104) gekoppelt ist, wobei
der Empfangsweg (104) konfiguriert ist, ein Hochfrequenzsignal vom Sendeweg zu empfangen, wenn der Schleifenschaltungsweg (124) geschlossen ist, und die Sende-/Empfangseinrichtung ferner eine digitale Verarbeitungsschaltung (240) umfasst, die konfiguriert ist zum
Empfangen eines ersten digitalen Basisbandsignals, das das gesendete Hochfrequenzsignal als Grundlage verwendet, und eines zweiten digitalen Basisbandsignals, das aus dem empfangenen Hochfrequenzsignal abgeleitet wurde;
Berechnen einer Ausbreitungszeit des Hochfrequenzsignals im Schleifenschaltungsweg auf der Grundlage des ersten digitalen Basisbandsignals und des zweiten digitalen Basisbandsignals;
Korrelieren unter Berücksichtigung der Ausbreitungszeit des ersten digitalen Basisbandsignals und des zweiten digitalen Basisbandsignals für verschiedene Zeitdifferenzen zwischen der Verwendung des Schwingungssignals durch die erste Mischschaltung und der Verwendung des Schwingungssignals durch die zweite Mischschaltung und

Erzeugen unter Verwendung der Zeitdifferenz, die mit dem besten Korrelationsergebnis in Beziehung steht, eines Steuerwortes für den Digital/Zeit-Umsetzer (120).

10. Sende-/Empfangseinrichtung nach Anspruch 9, wobei der Schleifenschaltungsweg (124) stromabwärts eines Leistungsverstärkers (218) im Sendeweg (124) an den Sendeweg (102) gekoppelt ist.

11. Sende-/Empfangseinrichtung nach Anspruch 9 oder Anspruch 10, wobei das Hochfrequenzsignal ein Hochfrequenzsendesignal ist, das Anwenderdaten führt.

12. Sende-/Empfangseinrichtung nach einem der Ansprüche 9 bis 11, wobei die digitale Verarbeitungsschaltung (240) konfiguriert ist, eine Ausbreitungszeit durch Folgendes zu berechnen:

Berechnen eines Verhältnisses des Fourier-transformierten zweiten digitalen Basisbandsignals zum Fourier-transformierten ersten digitalen Basisbandsignal und

Berechnen einer Steigung einer Phasenschwankung über der Winkelfrequenz für das Verhältnis, wobei der Betrag der Ausbreitungszeit des Hochfrequenzsignals im Schleifenschaltungsweg gleich dem Betrag der Steigung der Phasenschwankung ist.

13. Sende-/Empfangseinrichtung nach einem der Ansprüche 9 bis 12, wobei die digitale Verarbeitungsschaltung (240) konfiguriert ist, das erste digitale Basisbandsignal und das zweite digitale Basisbandsignal für verschiedene Zeitdifferenzen durch Folgendes zu korrelieren:

Berechnen eines Parameters einer Darstellung eines Verhältnisses des zweiten digitalen Basisbandsignals zum ersten digitalen Basisbandsignal jeweils für die verschiedenen Zeitdifferenzen, wobei der Parameter zur Differenz zwischen der Zeitdifferenz und der Ausbreitungszeit proportional ist; und

Wählen des Parameters, der die höchste Korrelation zwischen dem zweiten digitalen Basisbandsignal und dem ersten digitalen Basisbandsignal anzeigt, als das beste Korrelationsergebnis.

**Revendications**

1. Procédé (400) d'augmentation de la précision d'étalonnage de bouclage d'un émetteur-récepteur, comprenant :

la réception (402) d'un signal radiofréquence par l'intermédiaire d'un chemin de réception d'un émetteur-récepteur depuis un chemin d'émission de l'émetteur-récepteur qui est couplé au chemin de réception par l'intermédiaire d'un chemin de bouclage ;

le calcul (404) d'un temps de propagation du signal radiofréquence dans le chemin de bouclage sur la base d'un premier signal en bande de base numérique sur lequel est basé le signal radiofréquence émis, et d'un second signal en bande de base numérique dérivé du signal radiofréquence reçu ;

la corrélation (406), en tenant compte du temps de propagation, du premier signal en bande de base numérique et du second signal en bande de base numérique pour différentes différences de temps entre l'utilisation du signal d'oscillation par un premier circuit mélangeur dans le chemin d'émission et l'utilisation du signal d'oscillation par un second circuit mélangeur dans le chemin de réception ;

le retard (408), en utilisant la différence de temps liée au meilleur résultat de corrélation, du signal d'oscillation pour le premier circuit mélangeur ou pour le second circuit mélangeur ; et

la réalisation (410) d'un étalonnage de bouclage de l'émetteur-récepteur en utilisant le signal d'oscillation retardé.

2. Procédé selon la revendication 1, dans lequel le calcul (404) du temps de propagation du signal radiofréquence dans le chemin de bouclage comprend :

le calcul d'un rapport du second signal en bande de base numérique après transformation de Fourier sur le premier signal en bande de base numérique après transformation de Fourier ; et

le calcul d'une pente d'une variation de phase pour une fréquence angulaire du rapport,

dans lequel la valeur absolue du temps de propagation du signal radiofréquence dans le chemin de bouclage est égale à la valeur de la pente de la variation de phase.

**14**

**3.** Procédé selon la revendication 1 ou la revendication 2, dans lequel la corrélation (406) du premier signal en bande de base numérique et du second signal en bande de base numérique pour différentes différences de temps comprend :

l'ajustement, au moyen d'un convertisseur numérique-temps qui retarde le signal d'oscillation pour le premier circuit mélangeur ou pour le second circuit mélangeur, des différentes différences de temps entre l'utilisation du signal d'oscillation par le premier circuit mélangeur et l'utilisation du signal d'oscillation par le second circuit mélangeur.

**4.** Procédé selon l'une quelconque des revendications 1 à 3, dans lequel la corrélation (406) du premier signal en bande de base numérique et du second signal en bande de base numérique pour différentes différences de temps comprend :

le calcul d'un paramètre d'une représentation d'un rapport du second signal en bande de base numérique sur le premier signal en bande de base numérique pour les différentes différences de temps, respectivement, le paramètre étant proportionnel à la différence entre la différence de temps et le temps de propagation ; et
la sélection du paramètre indiquant la plus haute corrélation entre le second signal en bande de base numérique et le premier signal en bande de base numérique comme meilleur résultat de corrélation.

**5.** Procédé selon l'une quelconque des revendications précédentes, dans lequel le retard (408) du signal d'oscillation comprend :

l'ajustement, en utilisant la différence de temps liée au meilleur résultat de corrélation, d'un mot de code pour un convertisseur numérique-temps qui retarde le signal d'oscillation pour le premier circuit mélangeur ou pour le second circuit mélangeur.

**6.** Procédé selon l'une quelconque des revendications précédentes, dans lequel le signal radiofréquence est un signal d'émission radiofréquence véhiculant des données d'utilisateur.

**7.** Procédé selon l'une quelconque des revendications précédentes, dans lequel le chemin de bouclage est couplé au chemin d'émission en aval d'un amplificateur de puissance dans le chemin d'émission.

**8.** Procédé selon l'une quelconque des revendications précédentes, dans lequel la réalisation (410) de l'étalonnage de bouclage comprend :

l'émission d'un signal d'étalonnage par l'intermédiaire du chemin d'émission ;
la réception du signal d'étalonnage par l'intermédiaire du chemin de réception ; et
le calcul d'un modèle de pré-distorsion du chemin d'émission en utilisant le signal d'étalonnage reçu et le signal d'étalonnage émis.

**9.** Emetteur-récepteur (100) pour système de communication sans fil, comprenant:

un chemin d'émission (102) comprenant un premier circuit mélangeur (103) ;
un chemin de réception (104) comprenant un second circuit mélangeur (105) ;
un circuit oscillateur local (110) configuré pour générer un signal d'oscillation (112) pour le premier circuit mélangeur (103) et pour le second circuit mélangeur (105);
un convertisseur numérique-temps (120) configuré pour retarder le signal d'oscillation (112) pour le premier circuit (103) ou pour le second circuit mélangeur (105) par une différence de temps ajustable ; et
au moins un chemin de bouclage (124) couplé entre le chemin d'émission (102) et le chemin de réception (104), dans lequel le chemin de réception (104) est configuré pour recevoir un signal radiofréquence depuis le chemin d'émission quand le chemin de bouclage (124) est fermé, et dans lequel l'émetteur-récepteur comprend en outre un circuit de traitement numérique (240) configuré pour :

recevoir un premier signal en bande de base numérique sur lequel est basé le signal radiofréquence émis, et un second signal en bande de base numérique dérivé du signal radiofréquence reçu ;
calculer un temps de propagation du signal radiofréquence dans le chemin de bouclage sur la base du premier signal en bande de base numérique et du second signal en bande de base numérique ;
corréler, en tenant compte du temps de propagation, le premier signal en bande de base numérique et le second signal en bande de base numérique pour différentes différences de temps entre l'utilisation du signal d'oscillation par le premier circuit mélangeur et l'utilisation du signal d'oscillation par le second circuit mélangeur ; et

générer, en utilisant la différence de temps liée au meilleur résultat de corrélation, un mot de commande pour le convertisseur numérique-temps (120).

10. Emetteur-récepteur selon la revendication 9, dans lequel le chemin de bouclage (124) est couplé au chemin d'émission (102) en aval d'un amplificateur de puissance (218) dans le chemin d'émission (124).

11. Emetteur-récepteur selon la revendication 9 ou la revendication 10, dans lequel le signal radiofréquence est un signal d'émission radiofréquence véhiculant des données d'utilisateur.

12. Emetteur-récepteur selon l'une quelconque des revendications 9 à 11, dans lequel le circuit de traitement numérique (240) est configuré pour calculer un temps de propagation en :

calculant un rapport du second signal en bande de base numérique après transformation de Fourier sur le premier signal en bande de base numérique après transformation de Fourier ; et
calculant une pente d'une variation de phase pour une fréquence angulaire du rapport,
dans lequel la valeur absolue du temps de propagation du signal radiofréquence dans le chemin de bouclage est égale à la valeur de la pente de la variation de phase.

13. Emetteur-récepteur selon l'une quelconque des revendications 9 à 12, dans lequel le circuit de traitement numérique (240) est configuré pour corréler le premier signal en bande de base numérique et le second signal en bande de base numérique for différentes différences de temps en :

calculant un paramètre d'une représentation d'un rapport du second signal en bande de base numérique sur le premier signal en bande de base numérique pour les différentes différences de temps, respectivement, le paramètre étant proportionnel à la différence entre la différence de temps et le temps de propagation ; et
sélectionnant le paramètre indiquant la plus haute corrélation entre le second signal en bande de base numérique et le premier signal en bande de base numérique comme meilleur résultat de corrélation.

# FIG. 1

100

RX ⟶ | 105 | 104 |

112

120 ⊓⊓ 110

124

TX ⟵ | 103 | 102 |

FIG. 2   Part 1

$Gain_2 \cdot TX(t-\tau1) \cdot e^{j \cdot w_{LO} \cdot (t-\tau1)+j \cdot PN(t-\tau1)}$

230

RX → LNA

254      256

ATT

$\tau_1$

Post-PA
LPBK

250      260

Pre-PA
LPBK

264      266

ATT

252

TX ← Coupler

218      262

PA

$Gain_1 \cdot TX(t) \cdot e^{j \cdot w_{LO} \cdot t+j \cdot PN(t)}$

EP 3 402 098 B1

18

FIG. 2   Part 2

$Gain_{LPBK} \cdot TX(t-\tau 1) \cdot e^{j \cdot w_{LO} \cdot (\tau 2 - \tau 1) + j \cdot (PN(t-\tau 1) - PN(t-\tau 2))}$

EP 3 402 098 B1

FIG. 3

EP 3 402 098 B1

# FIG. 4

```
┌─────────────────────────────────────────┐
│     receiving a radio frequency signal     │──  402
└─────────────────────────────────────────┘

┌─────────────────────────────────────────┐
│       calculating a propagation time       │──  404
└─────────────────────────────────────────┘

┌─────────────────────────────────────────┐
│  correlating the first digital baseband signal  │──  406
│    and the second digital baseband signal    │
└─────────────────────────────────────────┘

┌─────────────────────────────────────────┐
│        delaying the oscillation signal        │──  408
└─────────────────────────────────────────┘

┌─────────────────────────────────────────┐
│      performing a loopback calibration       │──  410
└─────────────────────────────────────────┘
```

400

# FIG. 5

```
┌─────────────────────────────────────────┐
│        determining a time difference        │──  502
└─────────────────────────────────────────┘

┌─────────────────────────────────────────┐
│        delaying the oscillation signal        │──  504
└─────────────────────────────────────────┘

┌─────────────────────────────────────────┐
│      performing a loopback calibration       │──  506
└─────────────────────────────────────────┘
```

500

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150372644 A1
- US 20160359614 A1